# EUROPEAN PATENT APPLICATION

(11) **EP 4 823 153 A1**
(43) Date of publication of application: **14.10.2026**
(21) Application number: 24922752.1
(22) Date of filing: 05.02.2024
(51) Int. Cl.: H04W 24/02

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Taor, Simon Edward William
(86) International application number: PCT/CN2024/076106
(87) International publication number: WO 2025/166506

(57) **Abstract**

Provided are a wireless communication method, a terminal device and a network device. The method comprises: a terminal device receiving a first signal sent by a network device, a transmission resource for the first signal being determined on the basis of first information, the first information comprising information of a transmission resource for a second signal associated with the first signal, and/or configuration information of the transmission resource for the first signal; the first signal is used by a low-power receiver in the terminal device to perform synchronization and/or measurement, and the second signal comprises one or more of the following: a synchronization signal/PBCH block (SSB), an SSB burst set, and a primary synchronization signal (PSS)/secondary synchronization signal (SSS) in the SSB. Compared with a conventional solution in which synchronization and/or measurement is performed on the basis of only an SSB, the embodiments of the present disclosure introduce a first signal used by a low-power receiver to perform synchronization and/or measurement, thereby meeting the synchronization and/or measurement requirements of different types of terminal devices.

## Description

### TECHNICAL FIELD

The present disclosure relates to the field of communication technology, and more specifically, to a wireless communication method, a terminal device and network device.

### BACKGROUND

With the widespread application of communication systems, many types of terminal devices are introduced, and different types of terminal devices have different capabilities. For example, some terminal devices having lower capabilities may have no capability of receiving a synchronization signal/PBCH block (SSB), resulting in that this type of terminal devices cannot synchronize based on the SSB.

### SUMMARY

The present disclosure provides a wireless communication method, a terminal device and a network device. Various aspects of the present disclosure are described below.

A first aspect provides a wireless communication method, which includes an operation as follows. A terminal device receives a first signal sent by a network device, and a transmission resource of the first signal is determined based on first information. The first information includes information of a transmission resource of a second signal associated with the first signal, and/or configuration information of the transmission resource of the first signal. The first signal is used for synchronization and/or measurement of a low-power receiver in the terminal device, and the second signal includes one or more of: a synchronization signal broadcast channel block SSB; an SSB burst set; a primary synchronization signal (PSS) /secondary synchronization signal (SSS) in the SSB.

A second aspect provides a wireless communication method, which includes an operation as follows. A network device sends a first signal to a terminal device, and a transmission resource of the first signal is determined based on first information. The first information includes information of a transmission resource of a second signal associated with the first signal and/or configuration information of the transmission resource of the first signal. The first signal is used for synchronization and/or measurement of a low-power receiver in the terminal device, and the second signal includes one or more of: a synchronization signal broadcast channel block SSB; an SSB burst set; a primary synchronization signal (PSS) /secondary synchronization signal (SSS) in the SSB.

A third aspect provides a terminal device, including: a receiving unit configured to receive a first signal transmitted by a network device. A transmission resource of the first signal is determined based on first information. The first information includes information of a transmission resource of a second signal associated with the first signal, and/or configuration information of the transmission resource of the first signal. The first signal is used for synchronization and/or measurement of a low-power receiver in the terminal device, and the second signal includes one or more of: a synchronization signal broadcast channel block SSB; an SSB burst set; a primary synchronization signal (PSS) /secondary synchronization signal (SSS) in the SSB.

A fourth aspect provides a network device, including: a sending unit for send a first signal to a terminal device. A transmission resource of the first signal is determined based on first information. The first information includes information of a transmission resource of a second signal associated with the first signal, and/or configuration information of the transmission resource of the first signal. The first signal is used for synchronization and/or measurement of a low-power receiver in the terminal device, and the second signal includes one or more of: a synchronization signal broadcast channel block SSB; an SSB burst set; a primary synchronization signal (PSS) /secondary synchronization signal (SSS) in the SSB.

A fifth aspect provides a terminal device including a processor, a memory, and a communication interface. The memory is configured for storing one or more computer programs, and the processor is configured for calling the computer program in the memory to cause the terminal device to perform a part or all of the steps in the method of the first aspect.

A sixth aspect provides a network device including a processor, a memory, and a transceiver. The memory is configured for storing one or more computer programs, and the processor is configured for calling the computer program in the memory to cause the network device to perform a part or all of the steps in the method of the second aspect.

A seventh aspect of the embodiments of the present disclosure provides a communication system including the terminal device and/or the network device described above. In another possible design, the system may further include other devices that interact with the terminal device or the network device in the solutions provided by the embodiment of the present disclosure.

An eighth aspect of the embodiments of the present disclosure provides a computer-readable storage medium having a computer program stored thereon that causes a communication device (for example, a terminal device or a network device) to perform a part or all of the steps of the methods of each of the above aspects.

A ninth aspect of the embodiments of the present disclosure provides a computer program product including a non-transitory computer-readable storage medium having a computer program stored thereon. The computer program is operable to cause a communication device (e.g., a terminal device or a network device) to perform some or all of the steps in the methods of the aforementioned aspects. In some implementations, the computer program product may be a software installation package.

A tenth aspect of the embodiments of the present disclosure provides a chip including a memory and a processor, and the processor can call and execute a computer program from the memory to implement some or all of the steps described in the methods of the above aspects.

In the embodiments of the present disclosure, a first signal for synchronization and/or measurement of a low-power receiver is introduced, which facilitates meeting synchronization and/or measurement requirements of different types of terminal devices, compared to synchronization and/or measurement based only on SSB in the conventional solution. On the other hand, the transmission resource of the first signal may be determined based on the first information, which makes the terminal device and the network device have common understanding for the transmission resource the first signal, and improves the success rate of transmitting the first signal.

### BRIEF DESCRIPTION OF THE DRAWINGS

FIG. 1 is a schematic diagram of a wireless communication system to which the embodiment of the present disclosure is applied.
FIG. 2 is a schematic diagram of an association between a paging early indication (PEI) and a paging occasion (PO).
FIG. 3 is a schematic diagram of a structure of an SSB.
FIG. 4 is a schematic diagram of a scenario in which an SSB is transmitted.
FIG. 5 is a schematic diagram of the distribution of SSBs when *f* ≤ 3*GH*z in Case A.
FIG. 6 is a schematic diagram of a wireless communication method according to an embodiment of the present disclosure.
FIGS. 7 to 11 are schematic diagrams of a solution of determining a transmission resource of a first signal according to an embodiment of the present disclosure.
FIG. 12 is a schematic diagram of configuring a transmission resource of a first signal for a terminal device by a network device according to an embodiment of the present disclosure.
FIG. 13 is a schematic diagram of determining a transmission resource of a low power synchronization signal (LP-SS) according to another embodiment of the present disclosure.
FIG. 14 is a schematic diagram of a terminal device according to an embodiment of the present disclosure.
FIG. 15 is a schematic diagram of a network device according to an embodiment of the present disclosure.
FIG. 16 is a schematic structural diagram of a communication device according to an embodiment of the present disclosure.

### DETAILED DESCRIPTION

### Communication system

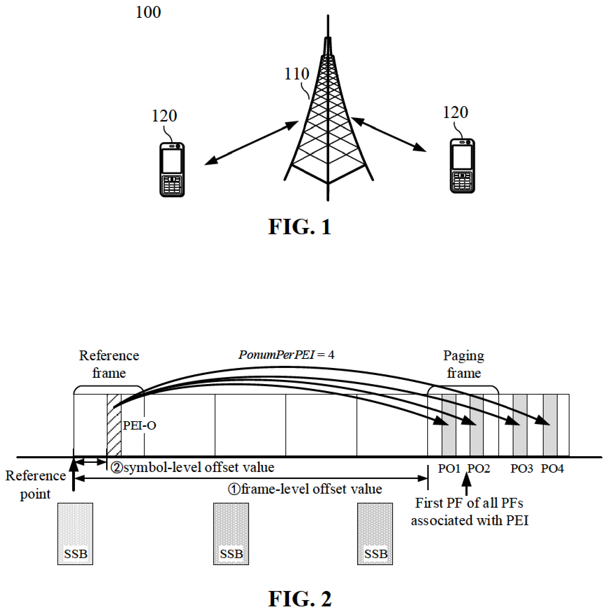

FIG. 1 shows a wireless communication system 100 to which an embodiment of the present disclosure is applied. The wireless communication system 100 may include a communication device. The communication device may include a network device 110 and a terminal device 120. The network device 110 may be a device that communicates with the terminal device 120.

FIG. 1 illustrates one network device and two terminals as an example. Optionally, the wireless communication system 100 may include a plurality of network devices, and the coverage area of each network device may include other number of terminal devices, which is not limited in the embodiment of the present disclosure.

Optionally, the wireless communication system 100 may further include other network entities such as a network controller and a mobile management entity, which is not limited in the embodiment of the present disclosure.

It should be understood that the technical solution of the embodiment of the present disclosure can be applied to various communication systems, such as a fifth generation (5G) system or a new radio (NR) system, a long-term evolution (LTE) system, an LTE frequency division duplex (FDD) system, an LTE time division duplex (TDD) system, and the like. The technical s provided by the present disclosure can also be applied to future communication systems, such as a sixth-generation mobile communication system, a satellite communication system, and the like.

The terminal device in the embodiment of the present disclosure may also be referred to as a user equipment (UE), an access terminal, a user unit, a user station, a mobile station, a mobile station (MS), a mobile terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines, such as a handheld device having a wireless connection function, a vehicle-mounted device, or the like. The terminal device in the embodiment of the present disclosure may be a mobile phone, a tablet computer (Pad), a notebook computer, a handheld computer, a mobile internet device (MID), a wearable device, a virtual reality (VR) device, an augmented reality (AR) device, a wireless terminal in industrial control, a wireless terminal in self-driving, a wireless terminal in the remote medical surgery, a wireless terminal in a smart grid, a wireless terminal in transportation safety, a wireless terminal in a smart city, a wireless terminal in a smart home, or the like. Alternatively, the UE may be used to act as a base station. For example, a UE may act as a scheduling entity that provides sidelink signals between UEs in vehicle-to-everything (V2X) or device-to-device (D2D), etc. For example, cellular telephones and vehicles communicate with each other using sidelink signals. Communicate between cellular phones and smart home devices does not require relaying communication signals through a base station.

The network device in the embodiment of the present disclosure may be a device for communicating with the terminal device. The network device may also include an access network device. The access network device may provide communication coverage for a particular geographic area and may communicate with the terminal device 120 located within the coverage area. The access network device may also be referred to as a radio access network device, a base station, or the like. The access network device in the embodiment of the present disclosure may refer to a radio access network (RAN) node (or device) that connects a terminal device to a wireless network. The access network device may broadly cover, or be replaced with, various names such as a Node B (NodeB), an evolved NodeB (eNB), a next generation NodeB (gNB), a Relay Station, an Access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. A base station may also refer to a communication module, a modem, or a chip disposed in the aforementioned device or apparatus. The base station may also be a mobile switch center, a device that performs a base station function in the D2D, V2X, machine-to-machine (M2M) communication, a network-side device in a 6G network, a device that performs a base station function in a future communication system, or the like. The base stations may support networks of the same or different access technologies. The embodiment of the present disclosure does not limit the specific technology and the specific device form adopted by the access network device.

The base station may be stationary or mobile. For example, a helicopter or a drone may be configured to act as a mobile base station, and one or more cells may move according to the location of the mobile base station. In other examples, a helicopter or drone may be configured to be used as a device to communicate with another base station.

The communication device in the wireless communication system may include not only an access network device and a terminal device, but also a core network element. The core network element can be realized by a device, that is, the core network element is the core network device. It will be understood that the core network device may also be a network device.

The core network element in the embodiment of the present disclosure may include a network element that processes and forwards signaling and data of a user. For example, the core network device may include a core network device such as a core access and mobility management function (AMF), a session management function (SMF), a user plane gateway, a location management function (LMF), and the like. The user plane gateway may be a server having functions such as mobility management, routing, and forwarding of user plane data, and is generally located on the network side, such as a serving gateway (SGW), a packet data network gateway (PGW), a user plane function (UPF), or the like. Of course, the core network can also include other network elements, which are not listed here.

In some deployments, the network device in the embodiment of the present disclosure may refer to a CU or a DU, or the network device may include a CU and a DU. The gNB may also include an AAU.

The network device and the terminal device may be deployed on land, including indoor or outdoor, handheld or vehicle-mounted; or may also be deployed on the water surface; or may also be deployed on the aircrafts, balloons and satellites in the air. In the embodiment of the present disclosure, the scene in which the network device and the terminal device are located is not limited.

It should be understood that all or part of the functionality of the communication device in the present disclosure may also be implemented by software functionality running on hardware, or by virtualization functionality instantiated on a platform, such as a cloud platform.

### Discontinuous reception (DRX)

In order to reduce the power consumption of the terminal, some communication systems, such as the LTE and NR system, propose the DRX mechanism. The DRX mechanism can make the terminal enter a discontinuous reception state instead of turning on the receiver all the time when there is no data reception for the terminal, for achieving the purpose of power saving. The DRX mechanism includes configuring a DRX cycle for the terminal. One DRX cycle consists of an "on duration" and an "opportunity for DRX". During the on duration, the terminal monitors and receives downlink channels and signals including PDCCH. During the opportunity for DRX, the terminal does not receive downlink channels and signals such as PDCCH to reduce power consumption.

In the evolution of communication system, a higher requirement for terminal energy saving is put forward. For some DRX mechanisms, during each on duration, the terminal should constantly detect the PDCCH to determine whether the network device schedules the data sent to itself. However, most terminals may have no need to receive data transmissions for a long period of time, but also should wake up regularly to monitor possible downlink transmissions. There is room for further optimization of the energy-saving mode of such terminals.

In response to the above problems, energy-saving signals have been introduced in some communication standards, such as the 3GPP R16 standard. The energy saving signal may implement further energy saving of the terminal device in the radio resource control (RRC) CONNECTED state (RRC_CONNECTED). The energy saving signals can be used in conjunction with the DRX mechanism. For example, before entering the DRX on duration, the terminal may first determine, based on the indication of the power saving signal, whether it is necessary to receive data during the DRX on duration. When the terminal has data transmission in one DRX cycle, the energy saving signal "wakes up" the terminal, and accordingly, the terminal monitors the PDCCH during the DRX on duration. Conversely, when the terminal has no data transmission in one DRX cycle, the energy saving signal does not "wake up" the terminal, and accordingly, the terminal does not need to monitor the PDCCH during the DRX on duration. With this DRX mechanism combined with the energy-saving signal, if the energy-saving signal does not wake up the terminal in the DRX cycle, the terminal does not monitor the PDCCH even in the DRX on duration, thereby realizing energy saving.

Some communications standards, such as the 3GPP R17 standard, further establish the End Energy Efficiency Enhancement Project. The Terminal Energy Saving Enhancement Project further standardizes the energy saving of terminals in the RRC IDLE (RRC_IDLE) state and RRC deactivated (RRC_INACTIVE) state. The power consumption of the terminals in the RRC_IDLE and RRC_INACTIVE states mainly comes from power consumption of periodic discontinuous reception paging, which includes performing time-frequency synchronization recovery and automatic gain control (AGC) before the PO arrives, and detecting the paging PDCCH during the PO.

In order to reduce power consumption during receiving paging, the relevant standards introduce an energy-saving signal for paging reception. This energy saving signal may be referred to as a PEI. The PEI may be used to indicate whether the terminal needs to receive paging at the PO before the terminal's PO arrives. That is, the PEI may be use to indicate whether to "wake up" the terminal before the terminal's PO arrives.

### PEI

A PEI occasion (PEI-O) is a set of multiple physical downlink control channel (PDCCH) monitoring occasions.

In some embodiments, the PEI-O may be a set of S consecutive PDCCH monitoring occasions when nrofPDCCH-MonitoringOccasionPerSSB-InPO is not configured. S denotes the number of actual transmitted SSBs determined according to ssb-PositionsInBurst in system information broadcast 1 (SIB1). In PEI-O, the quasi co location (QCL) of the kth PEI PDCCH monitoring occasion may be the same as the kth PDCCH monitoring occasion paged in the PO (the reference of the QCL is SSB).

In the unlicensed spectrum, the PEI-O may be a set of (S*X) consecutive PDCCH monitoring occasions. S denotes the number of actual transmitted SSBs determined from ssb-PositionsInBurst in SIB1. If nrofPDCCH-MonitoringOccasionPerSSB-InPO is configured, a configuration value nrofPDCCH-MonitoringOccasionPerSSB-InPO is taken by X, otherwise X =1. The (x*S + K)-th PDCCH monitoring occasion of the PEI monitoring occasions corresponds to the transmitted k-th SSB, where x =0, 1,..., X-1, K =1, 2,..., S. If X> 1, when the terminal detects a PEI in a PEI monitoring occasion, the terminal does not need to continue monitoring a subsequent monitoring occasion associated with the PEI monitoring occasions.

### Mapping between PEI and PO

The network device may configure a plurality of POs for each paging frame (PF). On the one hand, if each PEI corresponds to a PO, there will be a large number of independent PEIs, which will increase the overhead of PEIs. On the other hand, if each PEI corresponds to one PO, the PEIs corresponding to these POs may overlap in the time domain. In the 3GPP R15/16 standard, a wake-up signal (WUS) may be associated with one PO or multiple POs. In the PEI design, a mapping mechanism similar to WUS in 3GPP R15/16 standard is finally determined, that is, one PEI can be associated with one PO or multiple Pos, in order to reduce PEI overhead and avoid PEI overlap.

In some embodiments, one PEI is supported to associate POnumPerPEI POs. As shown in FIG. 2, the POnumPerPEI may be 4. That is, in FIG. 2, one PEI may be associated with four POs.

Alternatively, the POnumPerPEI POs associated with PEI may be in one or more PFs, and the maximum number of PFs associated with one PEI is 2.

Alternatively, POnumPerPEI is a factor of N×Nₛ. Here, N may denote the number of paging frames in one paging cycle, and Nₛ may denote the number of POs in one paging frame. POnumPerPEI can be configured via the SIB, and the range of value may be {1, 2, 4, 8}.

### Location of PEI-O

The terminal may determine the position of the PEI-O corresponding to the PO based on the reference point and the offset value (from the reference point to the first PDCCH monitoring occasion in the PEI-O). Hereinafter, an example will be described with reference to FIG. 2. The position of PEI-O may be determined by step 1 and step 2.

In step 1, a reference frame is determined, and a starting point of the reference frame is used as a reference point.

The reference frame may be determined based on the first PF of all PFs associated with the PEI (in the case of one PEI associating multiple POs, the associated POs may be located in different PFs) and a frame-level offset value.

The frame-level offset value from the first PF of all PFs associated with the PEI to the reference frame may be configured by the SIB.

In Step 2, a position of the first PDCCH monitoring occasion in the PEI-O is determined based on the reference point and the symbol-level offset value.

The symbol-level offset value from the reference point to the first PDCCH monitoring occasion in the PEI-O may be configured by the SIB, for example, the symbol-level offset value may be provided by the firstPDCCH-MonitoringOccasionOfPEI-O.

### LP-Wake up signal (WUS) /wake up receiver (WUR)

Considering further energy-saving processing for the terminal, some research topics (such as 3rd generation partnership project (3GPP) R18) introduce LP-WUR and design a LP-WUS signal. Specifically, when the LP-WUR is used to monitor the wake-up signal, a main receiver (MR) may be in an ultra-low power consumption state (for example, an ultra deep sleep state), thereby realizing energy saving of the terminal as a whole. The LP-WUR can monitor the LP-WUS signal, and when receiving the LP-WUS signal from the network device, the LP-WUR can wake up the main receiver.

The study of LP-WUS/WUR by the 3GPP RAN1 working group is taken as an example to explain.

In the study of LP-WUS/WUR, the RAN1 working group reached a preliminary consensus on the accuracy of LP-WUR oscillator, considering the following four options.

Option 1: the maximum frequency error of the oscillator is 200ppm, and the frequency drift of the oscillator is 0.1ppm/s.

Option 2: the maximum frequency error of the oscillator is 50ppm, and the frequency drift of the oscillator is 0.1ppm/s.

Option 3: the maximum frequency error of the oscillator is 10ppm, and the frequency drift of the oscillator is 0.05ppm/s.

Option 4: the maximum frequency error of the oscillator is 5ppm and the frequency drift of the oscillator is 0.05ppm/s.

Considering the maximum frequency error of the real time clock (RTC) in the LP-WUR is 20ppm, and the frequency drift is 0.1ppm/s.

In 3GPP R18, the LP-WUS/WUR was studied and the study report TR 38.869 was output. In 3GPP R19, the determination of LP-WUS/WUR was standardized, and some of the contents and objectives of the standardization in R19 are described below.

The R19 standardizes a LP-WUS universal design (RAN1, RAN4) that can be applied to both the IDLE/INACTIVE state and the CONNECTED state. Here, the LP-WUS signals based on the OOK (OOK-1 and/or OOK-4) are normalized, and an orthogonal frequency division multiplexing (OFDM) sequence may be superimposed on the OOK symbol. The LP-WUS should be designed to ensure that in the IDLE/INACTIVE state, the LP-WUS delivers the same information regardless of the receiver design adopted by the LP-WUR. Meanwhile, the OFDM sequence may also carry information. The LP-WUS may support at least a duty-cycled monitoring mode

First, for the IDLE/INACTIVE state, the procedure and configuration of the LP-WUS trigger monitoring for the paging message are standardized, including at least: "Configuration", "Subgroup", and "Conditions for entering/exiting LP-WUS monitoring" (RAN2, RAN1, RAN3, RAN4).

In addition, for the IDLE/INACTIVE state, an LP-SS with a normalized period of Yms for the LP-WUR may be used as a synchronization and/or radio resource management (RRM) measurement (RAN1, RAN4) of the serving cell. Here, the LP-SS may be based on the OOK-1 and/or OOK-4 waveforms, and the OFDM sequence may or may not be superimposed on the OOK symbols. In the WI, whether the LP-SS superimposes the OFDM sequence is selected.

Note that, for the LP-WUR that can receive a primary synchronization signal (PSS) /secondary synchronization signal (SSS) in the related art, the PSS/SSS signal in the related art can be used to replace the LP-SS for performing synchronization and RRM measurement.

It should be noted that the value of Y should be determined in the WI stage. For example, 320m may be used as an initial value of Y.

For the measurement of the primary receiver of the terminal in the serving cell and the neighboring cell, further standardization for RRM relaxation is performed. The RRM measurement of the serving cell of the terminal device can be measured from the MR to the LP-WUR, including the necessary conditional design (RAN4, RAN2).

Secondly, for the CONNECTED state, it is necessary to standardize the process of PDCCH monitoring by the main receiver of the terminal triggered by the LP-WUS, including the process of activation and deactivation (RAN2, RAN1) of the LP-WUS.

It should be noted that in the CONNECTED state, the main receiver of the terminal does not enter the ultra-deep sleep state, and radio resources (RR) /radio link monitoring (RLM) /bidirectional forwarding detection (BFD) /channel state information (CSI) measurement of the terminal are performed by the main receiver.

It should be noted that the coverage performance of LP-WUS and LP-SS may be close to that of physical uplink shared channel (PUSCH) message 3 (msg3).

The LP-WUS signal can be used to wake up the MR. Specifically, the LR of the terminal device monitors the LP-WUS, and when receiving the LP-WUS sent to the terminal device or sent to the terminal group where the terminal device is located, the LR wakes up the MR. Generally, the LR (low power receiver) can perform continuous LP-WUS monitoring, or perform discontinuous LP-WUS monitoring in a duty-cycle manner.

In some scenarios, in the process of monitoring LP-WUS by the LP-WUR, , time-frequency deviation occurs due to the accuracy of the oscillator, and it is necessary to monitor the synchronization signal for synchronization. In some discussions (e.g., 3GPP discussions), an LP-SS signal is introduced for LR, which is primarily used for synchronization of the LP-WUR, and/or used by the LR for performing measurements (e.g., RRM measurement). Of course, for the high-capability LR, it is possible to monitor the legacy's PSS/SSS signal for synchronization.

In some scenarios, the LR receiver may have different design modes, and can be mainly divided into two categories of LR receiver designs, which are described below in conjunction with Category 1 and Category 2, respectively.

The receiver of Category 1 can only perform synchronization and/or measurement based on the LP-SS, and do not have the reception detection capability of the PSS/SSS signal.

The receiver of Category 2 has the reception detection capability of the PSS/SSS signal, synchronization and/or measurement can be performed by receiving the PSS/SSS signal instead of the LP-SS signal.

### SSB

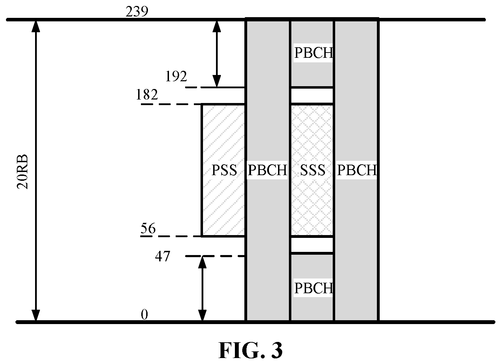

In some communication systems (e.g., the NR system), downlink synchronization is accomplished by receiving PSS and SSS signals in the SSB. FIG. 3 shows a structure of an SSB. As shown in FIG. 3, one SSB may occupy four OFDM symbols in the time domain, and one SSB can occupy 20 RBs in the frequency domain.

In some implementations, the subcarrier numbers of the SSB are 0-239. The PSS is located on the middle 127 SCs of symbol#0, and the SSS is located on the middle 127 SCs of symbol#2. To protect the PSS and the SSS, a plurality of carriers are set to 0, respectively.

As shown in FIG. 3, in the SSB, the PBCH may occupy all symbols#1 and#3, and symbol#2 excluding the SSS and the guard band. The remaining 2* (240-60) =360 subcarriers after excluding the DMRS from symbol#1 and symbol#3 are used as the transmission of the PBCH. The number of SCs after excluding DMRS from symbol#2 is (240-127-8-9) * 3/4=72 carriers. Thus, the PBCH has a total of 432 subcarriers.

As shown in FIG. 3, the DMRS is inserted in the PBCH for transmission, and the starting position of the DMRS in the SSB is determined by the physical cell ID modulo 4.

### Transmission of SSB

The SSB may be transmitted to different directions in the beam form in a TDD manner, so that terminal devices in different direction can receive the SSB. A series of SSBs transmitted by a network device may be referred to as a synchronous broadcast block SET (SS BURST SET).

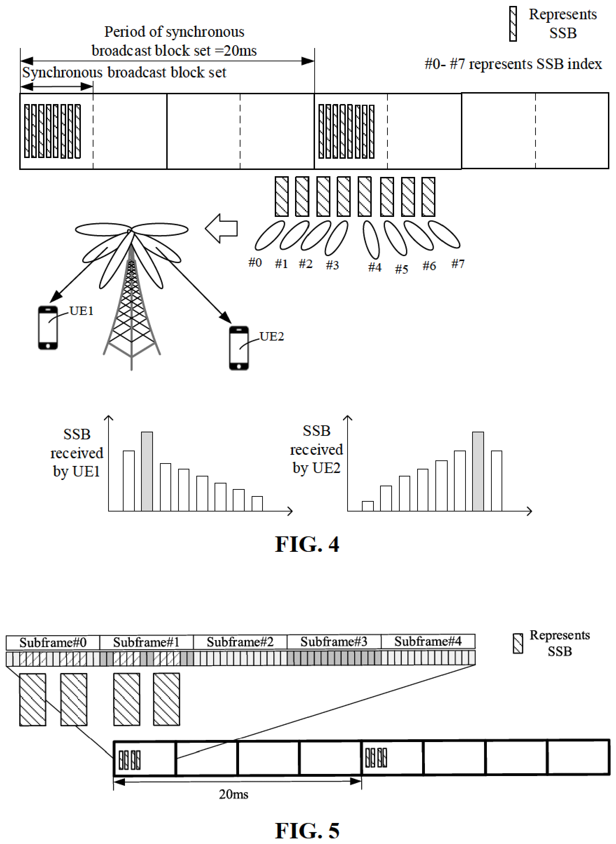

FIG. 4 is a schematic diagram of a scenario in which an SSB is sent. As shown in FIG. 4, the network device sends eight SSBs with SSB indexes (SSB indexes) #0 to#7 through eight beams, respectively, in a range of 5ms in a half frame to cover different directions. As can be seen from FIG. 4, these eight SSBs can constitute a synchronous broadcast block set.

The terminal device may receive a plurality of SSBs with different signal strengths. The terminal device may select the SSB beam with the strongest signal strength among the received SSBs as its own SSB beam.

As shown in FIG. 4, eight SSBs with different signal strengths are received by UE1 and UE2. SSB#1 has the strongest signal strength among the SSBs received by UE 1. Therefore, the beam corresponding to the SSB#1 may be the SSB beam of the UE 1. Among the SSBs received by UE2, SSB#6 has the strongest signal strength. Therefore, the beam corresponding to the SSB#6 may be the SSB beam of the UE 2.

The period of the synchronous broadcast block set may refer to the time interval at which the synchronous broadcast block set repeats. For example, the period may by default be 20ms. In the scenario shown in FIG. 4, the period of the of the synchronous broadcast block set is 20ms. In the ServingCellConfigCommon information element (IE) of TS38.331, the period value range (ssb-periodicityServingCell) of the SSB is ENUMERATED {ms5, ms10, ms20, ms40, ms80, ms160, spare2, spare1}.

Within 5ms, the configuration of the SSB in the time domain may be as shown in Table 1. Table 1 gives the starting OFDM position of the SSB within 5ms.

**Table 1**

| Subcarrier spacing | SSB Symbol (s) | *f* ≤ 3*GHz* | 3*GHz* < *f* ≤ 6*GHz* |
|---|---|---|---|
| Case A: 15KHz | {2, 8} + 14n | n = 0, 1 | n = 0, 1, 2, 3 |
| | | Located symbol = 2, 8, 16, 22 | Located symbol = 2, 8, 16, 22, 30, 36, 44, 50 |
| Case B: 30KHz | {4 ,8, 16, 20} + 28n | n = 0 | n = 0, 1 |
| | | Located symbol = 4, 8, 16, 0 | Located symbol = 4, 8, 16, 20, 32, 36, 44, 48 |
| Case C: 30KHz | {2, 8} + 14n | n = 0, 1 | n = 0, 1, 2, 3 |
| | | Located symbol = 2, 8, 16, 22 | Located symbol = 2, 8, 16, 22, 30, 36, 44, 50 |
| Subcarrier spacing | SSB Symbol (s) | *f* > ***6**GHz* | |
| Case D: 120KHz | {4, 8, 16, 20} + 28n | n = 0, 1, 2, 3, 5, 6, 7, 8, 10, 11, 12, 13, 15, 16, 17, 18 | |
| | | Located symbol = 4, 8, 16, 20, 32, 36, 44, ..., 508, 512, 520, 524 | |
| Case E: 240KHz | {8, 12, 16, 20, 32, 36, 40, 44} + 56n | n = 0, 1, 2, 3, 5, 6, 7, 8 | |
| | | Located symbol = 8, 12, 16, 20, 32, 36, 40, ..., 484, 488, 492 | |

FIG. 5 is a schematic diagram of the distribution of SSBs when *f* ≤ 3*GHz* in Case A. In FIG. 5, the SSB period is 20 ms.

It should be noted that not all SSBs within the synchronous broadcast block set are transmitted.

For example, in the ServingCellConfigCommon IE of TS 38.331, the index of the actually transmitted SSB is identified by the ssb-PositionsInBurst IE. An example of the ServingCellConfigCommon IE is shown below.

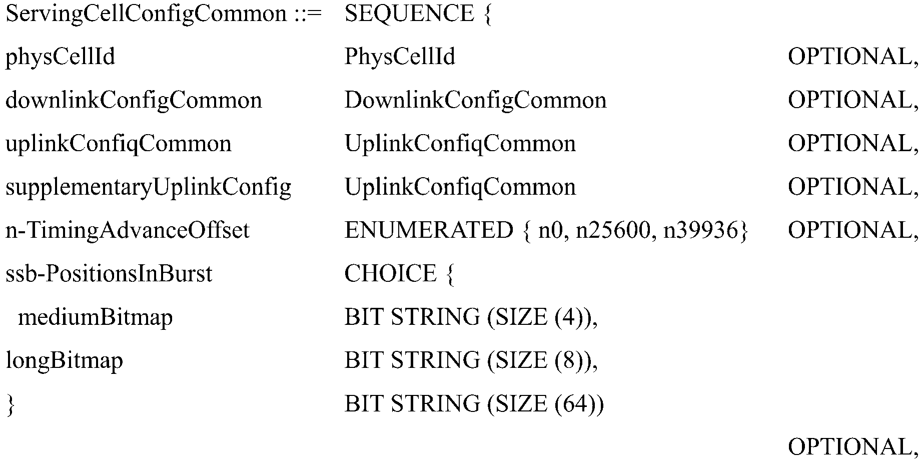

Here, shortBitmap, mediumBitmap, and longBitmap may identify indexes of SSBs actually transmitted in the case of f <3 GHz, 3 GHz <f <6 GHz, and f> 6 GHz, respectively. The shortBitmap, the mediumBitmap, and the longBitmap identify whether the SSB with corresponding SSB index is sent in the form of a bitmap. For example, 0 may indicate that the SSB is not sent, and 1 may indicate that the SSB is sent.

With the widespread application of communication systems, many types of terminal devices are introduced, and different types of terminal devices have different capabilities. For example, some terminal devices having lower capabilities may have no capability of receiving the SSB, resulting in that this type of terminal devices cannot synchronize based on the SSB.

Taking an LP terminal device as an example, since the oscillator accuracy of a low power receiver (LR) used by this type of terminal device is poor, the time-frequency deviation when receiving the LP-WUS becomes larger and larger over time, and therefore, synchronization and/or measurement are required to ensure the signal reception performance of the LR. However, such terminal devices may have no capability of receiving the SSB, let alone synchronization and/or measurement based on the SSB, due to their poor capabilities.

Therefore, in response to the above-mentioned problems, a signal (hereinafter also referred to as the first signal) for synchronization and/or measurement is introduced, which can meet the synchronization and/or measurement requirements of various types of terminal devices compared to synchronization and/or measurement based only on the SSBs in the conventional solution.

In some implementations, the first signal may be used by the LP terminal device for synchronization and/or measurement, e.g., the first signal may be used by the LR in the LP terminal device for measurement and/or synchronization. Taking the first signal for synchronization of the LP terminal device as an example, the first signal may be used for synchronization of the LP-WUR. Thus, the first signal is also referred to as "LP-SS". Taking the first signal used by the LP terminal device to perform measurement as an example, the first signal may be used by the LR of the LP terminal device to perform measurement.

In the embodiment of the present disclosure, the above-described measurement is not limited. In some implementations, the measurement may refer to radio resource management (RRM) measurement. For example, the measurement may be a measurement during a beam selection process.

In some implementations, the first signal may be modulated in an OOK manner to simplify the demodulation process of the first signal.

As described above, in order to be compatible with different types of terminal devices in the communication system, the first signal is introduced for measurement and/or synchronization of the terminal device. However, the mode of transmission of the first signal is not specified, resulting in the terminal device being unable to synchronize and/or measure based on the first signal.

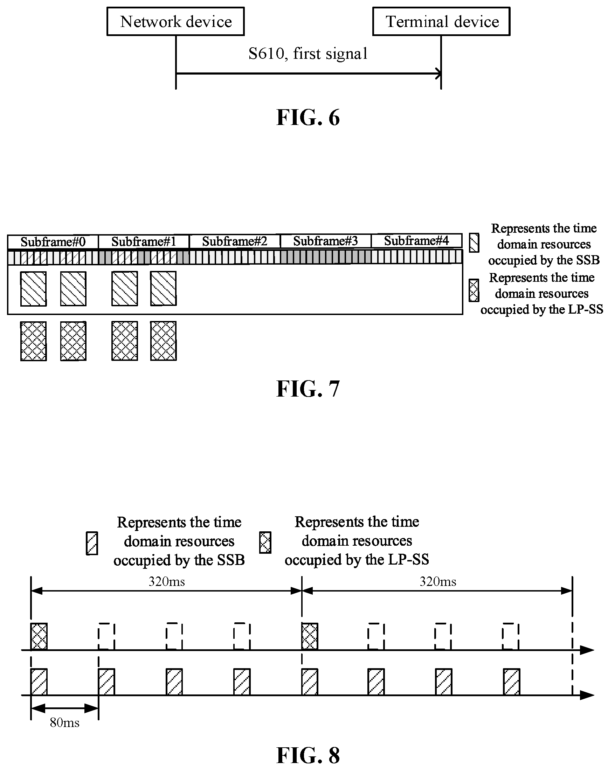

Therefore, an embodiment of the present disclosure proposes a wireless communication method, in which, as shown in step S610 in FIG. 6, a network device sends a first signal to a terminal device. A transmission resource of the first signal can be determined based on first information, which makes the terminal device and the network device have common understanding for the transmission resource the first signal, so as to realize synchronization and/or measurement based on the first signal.

In some scenarios, the terminal device monitors the first signal on the transmission resource of the first signal. Therefore, the transmission resource of the first signal may be referred to as the transmission resource on which the terminal device monitors the first signal.

In the embodiment of the present disclosure, the transmission resource is not limited. In some implementations, the transmission resource may include one or more of the following: a time domain resource, a frequency domain resource, and a code domain resource. Taking the transmission resource including the time domain resource as an example, the time domain resource may include a symbol, a time slot, a subframe, a frame, and the like. Of course, in the embodiment of the present disclosure, the transmission resource may also include other time domain resources introduced in a future communication system. Taking the transmission resource including the frequency domain resource as an example, the frequency domain resource may include the subcarriers, frequency band, bandwidth, and the like. Of course, in the embodiment of the present disclosure, the frequency domain resource may also include other frequency domain resources introduced in the future communication systems. Taking the transmission resource including the code domain resource as an example, the code domain resource may include a codebook, a codeword, and the like. Of course, in the embodiment of the present disclosure, the code domain resource may also include other code domain resources introduced in the future communication system.

In the embodiment of the present disclosure, there are many ways of realizing the first information, and the first information in the embodiment of the present disclosure will be described below with reference to the first embodiment and the second embodiment, respectively.

**First Embodiment:** The first information includes information of a transmission resource of a second signal, and the second signal is associated with the first signal.

In the embodiment of the present disclosure, the operation that the transmission resource of the first signal is determined based on the first information may be understood that the transmission resource of the first signal is determined based on the transmission resource of the second signal, to simplify the complexity of configuring the transmission resource of the first signal.

In some implementations, the first signal is associated with the second signal, it may be understood that the transmission resource of the first signal is determined based on the transmission resource of the second signal. In other implementations, the first signal being associated with the second signal can be understood as that the first signal and the second signal have a QCL relationship, or that the beam direction of the first signal is the same as the beam direction of the second signal. In other implementations, the first signal being associated with the second signal may be understood as that the first signal and the second signal have the same index. In other implementations, the first signal being associated with the second signal may be understood as that there may be a QCL relationship between the first signal and the second signal having the same index.

In some implementations, the second signal may include one or more of: an SSB; an SSB burst set; a PSS/SSS in the SSB.

In some implementations, the first signal may include an LP-SS or an LP-SS burst set. One or more LP-SS may be included in the LP-SS burst set. In some implementations, each LP-SS in the LP-SS burst set may be associated with a beam, and the LP-SS burst set may be used to measure the beam.

In some implementations, the first signals sent through different beams may, explicitly or implicitly, carry indexes of the first signals in the process that the beam is measured based on the first signal. Taking a case that the index is explicitly carried as an example, the first signal may be transmitted along with the index of the first signal through the beam. Taking a case that the index is implicitly carried as an example, the first signals on different beams use different synchronization sequences, and the different sequences correspond to different indices.

In the embodiment of the present disclosure, the manner of generating the synchronization sequence is not limited. For example, synchronization sequences of the first signals corresponding to a plurality of beams may be generated based on the same synchronization sequence. For example, multiple different synchronization sequences may be generated by cyclic shifting, scrambling, or the like on one synchronization sequence. Of course, in the embodiment of the present disclosure, the above-described different synchronization sequences may be completely different sequences.

In the embodiment of the present disclosure, the combination method of the first signal and the second signal is not limited. In some implementations, the first signal may be an LP-SS, the second signal may be an SSB, and accordingly, the transmission resource of the LP-SS may be determined based on the transmission resource of the SSB. In other implementations, the first signal may include a plurality of signals, the second signal may be an SSB burst set, and accordingly, the transmission resources of the plurality of signals may be determined based on the transmission resources of the SSB burst set. In other implementations, the first signal may include an LP-SS, the second signal may be an SSB burst set, and accordingly, the transmission resource of the LP-SS may be determined based on the transmission resource of an SSB in the SSB burst set, and the transmission resource of the SSB may be, for example, the first SSB in the SSB burst set. In other implementations, the first signal may be an LP-SS, the second signal may be a PSS/SSS in the SSB, and accordingly, the transmission resource of the LP-SS may be determined based on the transmission resource of the PSS/SSS in the SSB.

In some implementations, the second signal is an SSB burst set, and the first signal includes a plurality of signals, the number of the plurality of signals is the same as the number of SSBs in the SSB burst set. Taking the first signal including a plurality of LP-SS as an example, the number of LP-SS included in the first signal may be the same as the number of SSBs in the SSB burst set.

In some implementations, the second signal is an SSB burst set, and the first signal includes a plurality of signals, and the plurality of SSBs in the SSB burst set have one-to-one correspondence with the plurality of signals, and the plurality of SSBs have a QCL relationship with the corresponding first signals, or the plurality of SSBs and the corresponding first signals are sent through one beam.

In some implementations, the second signal is an SSB burst set, the first signal includes a plurality of signals, and the number of SSBs in the SSB burst set and the number of the plurality of signals are the same as the number of beams supported by the terminal device. Of course, in the embodiment of the present disclosure, since the beam participating in the measurement may be a part of beams among beams supported by the terminal device, the number of SSBs in the SSB burst set and the number of a plurality of signals each is the same as the number of beams participating in the measurement.

In some scenarios, the first signal may include a plurality of signals, and any two adjacent signals in the time domain among the plurality of signals may have the same interval, to simplify the complexity of transmitting the first signal. Of course, in the embodiment of the present disclosure, the intervals between two adjacent signals in the time domain among the plurality of signals may be partially or completely different, to improve the flexibility of transmitting the first signal.

The first signal and the second signal in the embodiment of the present disclosure are described above, and the transmission resource of the first signal and the transmission resource of the second signal in the embodiment of the present disclosure are described below.

In some implementations, the transmission resource of the first signal and the transmission resource of the second signal partially or completely overlap in the time domain. Of course, in the embodiment of the present disclosure, the transmission resource of the first signal and the transmission resource of the second signal do not overlap in the time domain.

In some implementations, the transmission resource of the first signal and the transmission resources of the second signal completely overlapping in the time domain can be understood that the time domain resource occupied by the first signal and the time domain resources occupied by the second signal completely overlap, or that the time domain resource occupied by the first signal and the time domain resource occupied by the second signal are the same. FIG. 7 will be described below.

In other implementations, the transmission resource of the first signal and the transmission resource of the second signal partially overlapping in the time domain can be understood that the time domain resource occupied by the first signal partially overlaps with the time domain resource occupied by the second signal, or that some of the time domain resource occupied by the first signal is a time domain resource occupied by the second signal. Hereinafter, FIGS. 8 to 9 will be described.

In some implementations, the transmission resource of the first signal may be determined based on the transmission resource of the second signal and a first parameter, and the first parameter is used to indicate a time domain interval between the transmission resource of the first signal and the transmission resource of the second signal.

In the embodiment of the present disclosure, the above-described time domain interval is not limited. In some implementations, the first parameter is used to indicate a time domain interval between a starting position in the time domain of a transmission resource of the first signal and a starting position in the time domain of a transmission resource of the second signal. For example, the first parameter is used to indicate a time domain interval between a starting symbol of the first signal and a starting symbol of the second signal. In other implementations, the first parameter is used to indicate a time domain interval between an ending position in the time domain of the transmission resource of the first signal and an ending position in the time domain of the transmission resource of the second signal. Of course, in the embodiment of the present disclosure, the first parameter is used to indicate a time domain interval between the starting position in the time domain of the transmission resource of the first signal and the ending position in the time domain of the transmission resource of the second signal, or the first parameter is used to indicate a time domain interval between the ending position in the time domain of the transmission resource of the first signal and the starting position in the time domain of the transmission resource of the second signal.

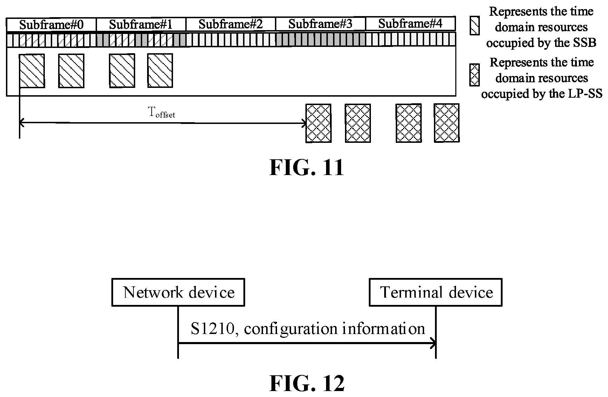

Note that, in the embodiment of the present disclosure, the implementation of the time domain interval is not limited. In some implementations, the time interval may be represented by a time domain offset value, which is described below in connection with FIG. 11. In other implementations, the time interval may be represented by a period of time. In other implementations, the time interval may be represented by the number of time domain resources.

In some implementations, the first parameter is used to indicate a time interval between a frame carrying the first signal and a frame carrying the second signal; and/or a time interval in the time domain between a transmission resource of the first signal and a target position of a frame carrying the first signal.

Taking the first parameter for indicating a time interval between a frame carrying the first signal and a frame carrying the second signal as an example, the time interval may be referred to as an "inter-frame interval".

In some implementations, the first signal may be carried in one or more frames. In this case, the frame carrying the first signal associated with the first parameter may be the earliest frame carrying the first signal in the time domain, i.e. the starting frame of the first signal. Of course, in the embodiment of the present disclosure, the frame carrying the first signal associated with the first parameter may be the latest frame carrying the first signal in the time domain, that is, the ending frame of the first signal. Alternatively, the frame carrying the first signal associated with the first parameter may be any frame carrying the first signal in the time domain.

In other implementations, the second signal may be carried in one or more frames. In this case, the frame carrying the second signal associated with the first parameter may be the earliest frame carrying the second signal in the time domain, i.e. the starting frame of the second signal. Of course, in the embodiment of the present disclosure, the frame carrying the second signal associated with the first parameter may be the latest frame carrying the second signal in the time domain, that is, the ending frame of the second signal. Alternatively, the frame carrying the second signal associated with the first parameter may be any frame carrying the second signal in the time domain.

In the embodiment of the present disclosure, the implementation of the inter-frame interval is not limited. In some implementations, the inter-frame interval may refer to a time interval between a starting position of a frame carrying a first signal and a starting position of a frame carrying a second signal. In other implementations, the inter-frame interval may refer to a time interval between the starting position of the frame carrying the first signal and the ending position of the frame carrying the second signal. In other implementations, the inter-frame interval may refer to a time interval between an ending position of the frame carrying the first signal and a starting position of the frame carrying the second signal. In other implementations, the inter-frame interval may refer to a time interval between the ending position of the frame carrying the first signal and the ending position of the frame carrying the second signal.

Taking the first parameter for indicating a time interval between a transmission resource of the first signal and a target position of a frame carrying the first signal as an example, the time interval may be referred to as an "intra-frame interval".

In the embodiment of the present disclosure, the target position is not limited. In some implementations, the target position may be the starting position of the frame carrying the first signal. In other implementations, the target position may be the ending position of the frame carrying the first signal. Of course, in the embodiment of the present disclosure, the target position may be any position of the frame carrying the first signal.

In the embodiment of the present disclosure, the transmission resource of the first signal is not limited. In some implementations, the transmission resource of the first signal may be a starting time domain position of the transmission resource of the first signal. In other implementations, the transmission resource of the first signal may be an ending time domain position of the transmission resource of the first signal. Of course, in the embodiment of the present disclosure, the transmission resource of the first signal may be any position of the transmission resource of the first signal.

In the embodiment of the present disclosure, the "intra-frame interval" and the "inter-frame interval" may be indicated by different parameters, that is, the first parameter may include a plurality of parameters to indicate the "intra-frame interval" and the "inter-frame interval", respectively. For example, the first parameter may include two parameters, one of which indicates "intra-frame interval" and the other indicates "inter-frame interval". Of course, in the embodiment of the present disclosure, the above-described "intra-frame interval" and "inter-frame interval" may be indicated by one parameter, for example, the parameter may be an index of a parameter combination of "intra-frame interval" and "inter-frame interval".

In some implementations, if the time domain resource occupied by the first signal partially or completely overlap with the time domain resource occupied by the second signal, the frequency domain resource occupied by the first signal and the frequency domain resource occupied by the second signal do not overlap, to distinguish the first signal from the second signal. Of course, in the embodiment of the present disclosure, if the time domain resource occupied by the first signal and the time domain resource occupied by the second signal do not overlap, the frequency domain resource occupied by the first signal may overlap the frequency domain resource occupied by the second signal, so as to simplify the configuration process of the frequency domain resource occupied by the second signal.

In the embodiment of the present disclosure, the method of determining the frequency domain resource occupied by the first signal is not limited. In some implementations, the frequency domain resource occupied by the first signal may be determined based on the frequency domain resource occupied by the second signal. For example, the frequency domain resource occupied by the first signal may be determined by offsetting the frequency domain resource occupied by the second signal by a frequency domain offset value, and the frequency domain offset value may be predefined, preconfigured, or configured by the network device. For another example, the frequency domain resource occupied by the first signal may be the same as the frequency domain resource occupied by the second signal. Of course, in the embodiment of the present disclosure, the frequency domain resource occupied by the first signal may be individually configured by the network device.

In some implementations, the number of time domain resources occupied by the first signal is the same as the number of time domain resources occupied by the second signal, to simplify the complexity of the measurement based on the first signal as well as the second signal. For example, both the first signal and the second signal can be used for beam measurement. In the embodiment of the present disclosure, both the first signal and the second signal transmitted through the same time domain resource are used for measuring a beam, and the receiving end does not need to distinguish the first signal and the second signal from the number of time domain resources, to simplify the complexity of the measurement based on the first signal and the second signal. Of course, in the embodiment of the present disclosure, the number of time domain resources occupied by the first signal may be different from the number of time domain resources occupied by the second signal, to improve the flexibility of transmission of the first signal. For example, the number of time domain resources occupied by the first signal may be greater than the number of time domain resources occupied by the second signal. Since the number of symbols occupied by the second signal is 4, the number of symbols occupied by the first signal may be greater than 4.

In the embodiment of the present disclosure, the number of time domain resources occupied by the first signal (or the length of time domain resources occupied by the first signal) may be determined by one or more of the following: predefined information, preconfigured information, and configuration information of a network device.

In an embodiment of the present disclosure, the first signal may be periodically transmitted. In some implementations, the transmission period of the first signal may be the same as the transmission period of the second signal to simplify the manner in which the first signal is transmitted.

In other implementations, the transmission period of the first signal may be different from the transmission period of the second signal, to improve the flexibility of transmission of the first signal. For example, the transmission period of the first signal may be greater than the transmission period of the second signal to reduce the frequency at which the terminal device receives the first signal, and to reduce power consumption required for the terminal device to receive the first signal. Of course, in the embodiment of the present disclosure, the transmission period of the first signal may be greater than the transmission period of the second signal.

In some implementations, the transmission period of the first signal may be an integer multiple of the transmission period of the second signal. For example, the first signal is an LP-SS burst set, the second signal is an SSB burst set, and the transmission period of the LP-SS burst set is T_{LP-SS}, the transmission period of the SSB burst set is T_{SSB}, and accordingly, there are time domain resources of N SSB burst sets in T_{LP-SS}, where N = T_{LP-SS} /T_{SSB}. Hereinafter, the description will be made with reference to FIGS. 8 to 9, and the description will not be repeated here for simplicity.

In the embodiment of the present disclosure, the transmission period of the first signal may be determined by one or more of the following: predefined information, preconfigured information, and configuration information of the network device. Taking a case that the transmission period of the first signal is determined based on the configuration information of the network device as an example, the network device may configure the transmission period of the first signal by configuring an LPSS period ("LPSS-periodicityServingCell") parameter in a serving cell in the configuration information.

As described above, the transmission resource of the first signal may be determined based on the transmission resource of the associated second signal. In the embodiment of the present disclosure, the method of determining the second signal associated with the first signal is not limited. In some implementations, the second signal associated with the first signal may be determined based on predefined information and/or configuration information transmitted by the network device.

In some implementations, the predefined information and/or configuration information described above is used to indicate an index of the second signal. For example, the predefined information and/or the configuration information indicates that the second signal is an i-th SSB burst set in a transmission period of the LP-SS, where i is a positive integer greater than or equal to 0.

In other implementations, the predefined information and/or configuration information described above is used to indicate a relative position between the transmission resource of the second signal and the transmission resource of the first signal within a transmission period of the first signal.

In some scenarios, the parameter used to configure the relative position may be referred to as an intra-period LPSS position "LPSS-PositionsInPeriodicity".

In the embodiment of the present disclosure, the implementation of the above-described relative position is not limited. In some implementations, the relative position may be represented by a time interval, i.e., a time interval between the transmission resource of the first signal and the transmission resource of the second signal within the LP-SS period. In other implementations, the relative position may be indicated by the nth second signal in the transmission period of the first signal, n =1, 2,..., N, where N is the total number of second signals transmitted in the transmission period of the first signal. For example, there are time domain resources of N SSB burst sets in T_{LP-SS}, and the second signal is the n-th SSB burst set in T_{LP-SS}.

For ease of understanding, predefined information and/or preconfigured information for indicating the second signal in the embodiment of the present disclosure is described below in conjunction with Table 2. As shown in Table 2, the predefined information and/or the preconfigured information may include the parameters "LPSS-periodicityServingCell" and "LPSS-PositionsInPeriodicity". The parameter "LPSS-periodicityServingCell" is used to indicate the transmission period of the first signal, the optional values of the transmission period include 320ms, 640ms, 960ms, 1280ms. The parameter "LPSS-PositionsInPeriodicity" is used to indicate that the second signal associated with the first signal in the transmission period of the first signal is the nth second signal, and the optional value of n include 1, 2, ..., N.

**Table 2**

| **parameter** | **Value** |
|---|---|
| *LPSS-periodicityServingCell* | 320ms, 640ms, 960ms, 1280ms, ... |
| *LPSS-PositionsInPeriodicity* | ENUMERATED {1,2, ..., N} Note: $N = \frac{{T}_{LP - SS}}{{T}_{SSB}}$ |

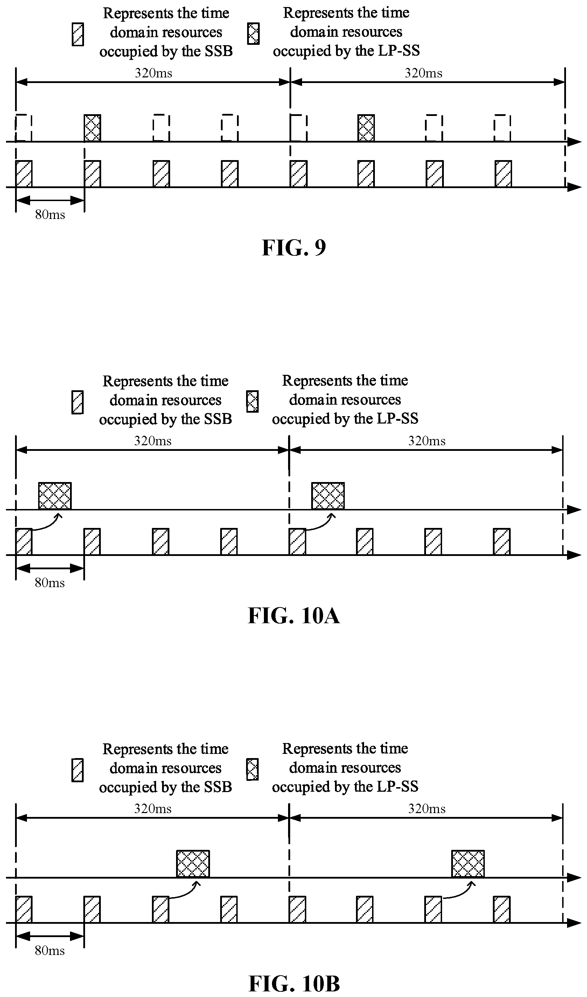

For ease of understanding, a solution for determining a transmission resource of a first signal in an embodiment of the present disclosure will be described below with reference to FIGS. 7 to 11. Here, FIGS. 7 to 9 are described by taking an example in which the number of time-domain resources of the first signal is the same as the number of time-domain resources of the second signal, and FIGS. 10A to 11 are described by taking an example in which the number of time-domain resources of the first signal is larger than the number of time-domain resources of the second signal.

As shown in FIG. 7, assuming that the first signal is an LP-SS and the second signal is an SSB, the frequency domain resource of the LP-SS does not overlap the frequency domain resource of the SSB. The transmission period of the LP-SS is the same as the transmission period of the SSB, and the time domain resource of the first signal are the same as the time domain resource of the second signal, that is, the time domain resource of the first signal and the time domain resource of the second signal completely overlap.

As shown in FIG. 8, assuming that the first signal is an LP-SS and the second signal is an SSB, the frequency domain resource of the LP-SS does not overlap the frequency domain resource of the SSB. The transmission period of the LP-SS is 320ms and the transmission period of the SSB is 80ms. That is, the transmission period of the LP-SS is four times the transmission period of the SSB, and the four time-domain resources for transmitting SSBs are included in the transmission period of the LP-SS. In addition, the transmission resource of the LP-SS in the transmission period of the LP-SS has the same time domain position as the transmission resource of the first SSB, or the time domain resource of the LP-SS in the transmission period of the LP-SS is the same as the time domain resource of the first SSB, and the time domain resources of other SSBs other than the time domain resource of the first SSB in the transmission period of the LP-SS do not transmit the LP-SS, that is, the time domain resources of the LP-SS partially overlap with the time domain resources of the SSB.

Accordingly, the first SSB may be determined by the above-described parameter "LPSS-periodicityServingCell", and the transmission period of the LP-SS may be determined by the parameter "LPSS-periodicityServingCell".

As shown in FIG. 9, assuming that the first signal is an LP-SS and the second signal is an SSB, the frequency domain resource of the LP-SS does not overlap the frequency domain resource of the SSB. The transmission period of LP-SS is 320ms and the transmission period of the SSB is 80ms. That is, the transmission period of the LP-SS is four times the transmission period of the SSB, and the four time-domain resources for transmitting the SSBs are included in the transmission period of the LP-SS. In addition, the transmission resource of the LP-SS in the transmission period of the LP-SS has the same time domain position as the transmission resource of the second SSB, or the time domain resource of the LP-SS in the transmission period of the LP-SS is the same as the time domain resource of the second SSB, and the time domain resources of other SSBs other than the time domain resource of the first SSB in the transmission period of the LP-SS do not transmit the LP-SS, that is, the time domain resources of the LP-SS partially overlap with the time domain resources of the SSB.

Accordingly, the second SSB may be determined by the above-described parameter "LPSS-periodicityServingCell", and the transmission period of the LP-SS may be determined by the parameter "LPSS-periodicityServingCell".

As shown in FIG. 10A, assuming that the first signal is an LP-SS and the second signal is an SSB, the frequency domain resource of the LP-SS does not overlap the frequency domain resource of the SSB. The number of time domain resources of the SSB is 4, and the number of time domain resources of the LP-SS is greater than 4. The transmission period of the LP-SS is 320ms and the transmission period of the SSB is 80ms. That is, the transmission period of the LP-SS is four times the transmission period of the SSB, and the four time-domain resources for transmitting the SSBs are included in the transmission period of the LP-SS. In addition, the time domain position of the transmission resource of the LP-SS within the transmission period of the LP-SS is determined based on the time domain resource of the first SSB, or the LP-SS within the transmission period of the LP-SS is associated with the first SSB.

As shown in FIG. 10B, assuming that the first signal is an LP-SS and the second signal is an SSB, the frequency domain resource of the LP-SS does not overlap the frequency domain resource of the SSB. The number of time domain resources of the SSB is 4, and the number of time domain resources of the LP-SS is greater than 4. The transmission period of the LP-SS is 320ms and the transmission period of the SSB is 80ms. That is, the transmission period of the LP-SS is four times the transmission period of the SSB, and the four time domain resources for transmitting the SSBs are included in the transmission period of the LP-SS. In addition, the time domain position of the transmission resource of the LP-SS within the transmission period of the LP-SS is determined based on the time domain resource of the third SSB, or the LP-SS is associated with the third SSB within the transmission period of the LP-SS.

As shown in FIG. 11, assuming that the first signal is an LP-SS and the second signal is an SSB, the frequency domain resource of the LP-SS does not overlap the frequency domain resource of the SSB. The first parameter is used to indicate a time offset value T_{offset} between the transmission resource of the first LP-SS and the transmission resource of the first SSB in the time domain. That is, the time offset value between the starting time domain position of the transmission resource of the first LP-SS and the starting time domain position of the transmission resource of the first SSB is T_{offset}.

Note that, with taking the above case that the first signal is an LP-SS and the second signal is an SSB as an example, the relationship between the transmission resource of the first signal and the transmission resource of the second signal in the embodiment of the present disclosure will be described with reference to FIGS. 7 to 11. The solution described in FIGS. 7 to 11 are also applicable to the case where the first signal is an LP-SS burst set and the second signal is an SSB burst set. Also, the time domain resource of the first signal can be understood as the time domain resource of the LP-SS burst set, and the time domain resource of the second signal can be understood as the time domain resource of the SSB burst set.

**Second Embodiment:** The first information includes configuration information of the transmission resource of the first signal.

That is, the transmission resource of the first signal can be independently configured by the configuration information, to improve flexibility in configuring the transmission resource of the first signal.

In the embodiment of the present disclosure, a manner of transmitting the configuration information is not limited. In some implementations, the configuration information may be carried in RRC signaling.

In some implementations, the above configuration information is used to configure one or more of: a time domain length of the first signal; a transmission period of the first signal; a time domain position of the first signal in the first frame; the number of first signals transmitted in a bearing first frame; a subcarrier spacing of the first signal.

Taking the configuration information for configuring the time domain length of the first signal as an example, the time domain length of the first signal may be indicated by the number of time domain resources occupied by the first signal. Of course, in the embodiment of the present disclosure, the time domain length of the first signal can be expressed by the duration corresponding to the time domain resource occupied by the first signal.

Taking the configuration information for configuring the transmission period of the first signal as an example, the transmission period of the first signal can be described above.

Taking the configuration information for configuring the time domain position of the first signal within the first frame as an example, in some scenarios, a parameter for indicating the time domain position of the first signal within the first frame may be referred to as "LPSS-positionInPeriodicity".

In some implementations, the configuration information may directly configure the time domain position of the first signal within the first frame.

In the embodiment of the present disclosure, the time domain position of the first signal in the first frame configured by the configuration information is not specifically limited. In some implementations, the configuration information may configure a starting time domain position of the first signal within the first frame. For example, the configuration information may indicate a starting symbol of the first signal within the first frame. In other implementations, the configuration information may be used to configure the ending time domain position of the first signal within the first frame. For example, the configuration information may indicate an ending symbol of the first signal within the first frame.

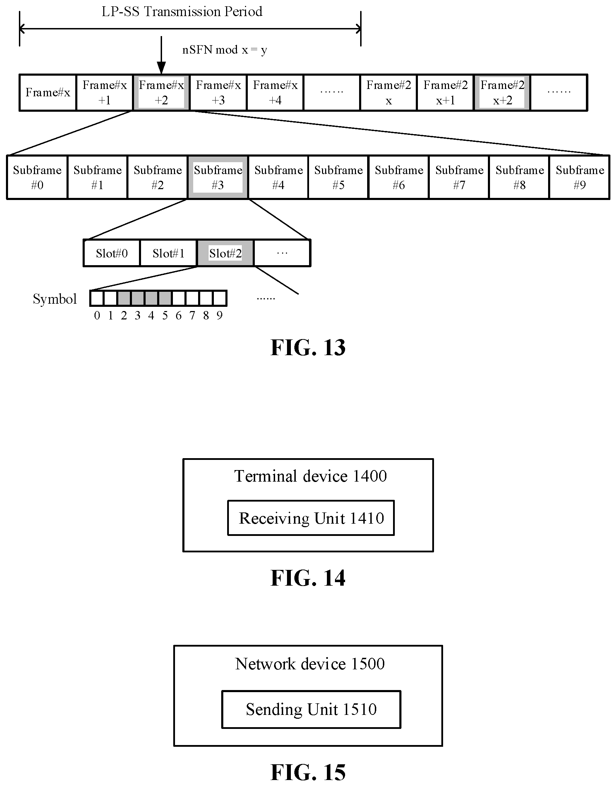

In other implementations, the above configuration information may hierarchically indicate a time domain position of the first signal within the first frame. For example, the configuration information may indicate a subframe carrying the first signal in the first frame, and/or a symbol carrying the first signal in the subframe carrying the first signal. For another example, the configuration information may indicate a subframe carrying the first signal in the first frame, a time slot carrying the first signal in the subframe, and a symbol carrying the first signal in the time slot. The description is given hereinafter below with reference to FIG. 13.

In the embodiment of the present disclosure, the number of subframes carrying the first signal is not limited. In some implementations, the number of subframes carrying the first signal may be more than one, and at this time, the configuration information may be used to indicate a plurality of subframes carrying the first signal. For another example, the number of subframes carrying the first signal may be one, and in this case, the configuration information may be used to indicate one subframe carrying the first signal.

In the embodiment of the present disclosure, a manner in which the configuration information indicates a symbol carrying the first signal is not limited. In some implementations, the configuration information may indicate a time domain interval between a starting time domain position of a subframe carrying the first signal and a starting symbol carrying the first signal. In other implementations, the configuration information may indicate a time domain interval between a starting time domain position of a subframe carrying the first signal and an ending symbol carrying the first signal.

In the embodiment of the present disclosure, the number of time domain positions of the first signal in the first frame is not limited. For example, the number of time domain positions of the first signal in the first frame may be more than one, and in this case, the configuration information may be used to configure the plurality of time domain positions of the first signal in the first frame. For another example, the number of time domain positions of the first signal in the first frame may be one, and in this case, the configuration information may be used to configure one time domain position of the first signal in the first frame.

It should be noted that, the time domain position of the first signal in the first frame may be predetermined or preconfigured, in addition to being configured the configuration information. For example, it may be predetermined that a plurality of time domain resources for transmitting the first signal may be included in one frame. For another example, it may be predetermined that only one time domain resource for transmitting the first signal may be included in one frame.

Taking the configuration information for configuring the number of first signals transmitted in the first frame as an example, as described above, if a plurality of first signals are transmitted in the first frame, the configuration information may indicate the time domain positions of the plurality of first signals in the first frame, and at this time, it can be understood that the configuration information indirectly indicates the number of first signals transmitted in the first frame. Of course, in the embodiment of the present disclosure, the configuration information directly indicates the number of first signals transmitted in the first frame.

Taking the configuration information for indicating the subcarrier spacing of the first signal as an example, a parameter for indicating the subcarrier spacing of the first signal may be referred to as "LPSS-SubcarrierSpacing".

Note that, as described above, the first signal may be used by the LR for synchronization, and accordingly, the first frame described above may also be referred to as an "LR synchronization frame".

Hereinafter, a solution in which a network device configures a transmission resource of a first signal for a terminal device in an embodiment of the present disclosure is described with reference to FIG. 12. As shown in FIG. 12, in operation S1210, the network device sends configuration information to the terminal device. The configuration information is carried by RRC signaling, and the configuration information includes one or more of the following parameters: LPSS-periodicityServingCell for indicating a transmission period of the LP-SS; LPSS-positionInPeriodicity for indicating the position of the LR synchronization frame configured within the transmission period of the LP-SS; LPSS-SubcarrierSpacing for indicating the subcarrier spacing of the LP-SS; LPSS-Duration for indicating the time domain length of the LP-SS; LPSS-timeoffset for indicating the time domain position of the LPSS within the LR synchronization frame. The time domain offset may be one or more, i.e. corresponding to one or more time domain positions.

It should be noted that the first signal configured in the second embodiment may be associated with the second signal, and regarding the association between the first signal and the second signal, reference may be made to the first embodiment. In addition, the transmission solution (for example, the transmission period of the first signal and the transmission period of the second signal, and/or the transmission resource of the first signal and the transmission resource of the second signal) of the first signal and the second signal described in the first Embodiment may also be applied to the second Embodiment, and will not be described again here for simplicity.

In some implementations, the transmission period of the first signal may be determined based on one or more of the following parameters: a frame number of an SFN carrying the first signal; a length of a transmission period of the first signal; a time domain position of a transmission period of the first signal within the frame.

The time domain position of the transmission period of the first signal within the frame may include a time domain position of the starting position of the transmission period of the first signal within the frame, or a time domain position of the ending position of the transmission period of the first signal within the frame.

Note that regarding the frame number of the SFN carrying the first signal and the length of the transmission period of the first signal, reference may be made to the foregoing description, and will not be described in detail here for simplicity.

For example, nSFN represents the frame number of the SFN, the transmission period of the first signal is x, and y' represents the starting position of the transmission period of the first signal, then y` = nSFN mod x.

In some implementations, the first frame may be determined based on the length of the transmission period of the first signal and the frame number of the SFN. For example, nSFN represents the frame number of the SFN, the length of the transmission period of the first signal is x, and y represents an index or offset value of the frame carrying the first signal in the transmission period of the first signal, y = nSFN mod x. Here, the value of the parameter y may be one or more.

A method of determining a transmission resource of an LP-SS in an embodiment of the present disclosure will be described below with reference to FIG. 13. Referring to FIG. 13, the Frame carrying the first signal is determined to be Frame#x +2 according to the formula y '= nSFN mod x, where nSFN represents the Frame number of the SFN, the value of x is equal to the time domain length of the period of the LP-SS, and y' represents the index/time domain offset value of the Frame in which the LP-SS is located during the transmission period of the LP-SS. Thereafter, a time domain resource carrying the LP-SS is determined. It is assumed that the network device configures, by configuration information, the Subframe carrying the LP-SS to be Subframe#3, and configures the time Slot carrying the LP-SS in the Subframe to be Slot#2, and the symbols carrying the LP-SS in the time Slot to be symbols 2 to 5.

Method embodiments of the present disclosure are described in detail above with reference to FIGS. 1 to 13, and apparatus embodiments of the present disclosure are described in detail below with reference to FIGS. 14 to 16. It is to be understood that the description of the method embodiments corresponds to the description of the apparatus embodiments, and therefore, regarding portions not described in detail, reference may be made to the preceding method embodiments.

FIG. 14 is a schematic diagram of a terminal device according to an embodiment of the present disclosure. The terminal device 1400 illustrated in FIG. 14 includes a receiving unit 1410.

The receiving unit 1410 is configured to receive a first signal transmitted by a network device. A transmission resource of the first signal is determined based on first information, and the first information includes information of a transmission resource of a second signal associated with the first signal and/or configuration information of a transmission resource of the first signal. The first signal is used for synchronization and/or measurement by a low-power receiver in the terminal device, and the second signal includes one or more of: a synchronization signal broadcast channel block SSB; an SSB burst set; a primary synchronization signal PSS/secondary synchronization signal SSS in the SSB.

In some implementations, the first information includes information of a transmission resource of the second signal, and the transmission resource of the second signal partially or completely overlaps with the transmission resource of the first signal in the time domain.

In some implementations, the first information includes information of a transmission resource of the second signal, the transmission resource of the first signal is determined based on the transmission resource of the second signal and a first parameter, and the first parameter is used to indicate a time domain interval between the transmission resource of the first signal and the transmission resource of the second signal.

In some implementations, the first parameter is used to indicate a time domain interval between a starting position in the time domain of a transmission resource of the first signal and a starting position in the time domain of a transmission resource of the second signal.

In some implementations, the first parameter is used to indicate a time interval between a frame carrying the first signal and a frame carrying the second signal; and/or a time interval in the time domain between a transmission resource of the first signal and a target location of a frame carrying the first signal.

In some implementations, the second signal associated with the first signal is determined based on predefined information and/or configuration information sent by a network device.

In some implementations, the predefined information and/or the configuration information is used to indicate that a transmission resource of the first signal is determined based on a transmission resource of the second signal in a transmission period of the first signal.

In some implementations, the predefined information and/or the configuration information includes an index of the second signal; and/or a relative position between a transmission resource of the second signal and a transmission resource of the first signal within a transmission period of the first signal.

In some implementations, the first information includes configuration information of a transmission resource of the first signal, and the configuration information is used to configure one or more of: a time domain length of the first signal; a transmission period of the first signal; a subcarrier spacing of the first signal; a time domain position of the first signal in a first frame; the number of first signals transmitted in the bearing first frame.

In some implementations, the transmission period of the first signal is greater than the transmission period of the second signal.

In some implementations, the transmission period of the first signal is an integer multiple of the transmission period of the second signal.

In some implementations, the number of time domain resources included in the transmission resource of the first signal is greater than or equal to the number of time domain resources included in the transmission resource of the second signal.

In some implementations, there is a quasi-co-located QCL relationship between the first signal and the second signal.

In some implementations, there is a QCL relationship between the first signal and the second signal which have the same index.

In some implementations, the second signal is an SSB burst set, and the first signal is a plurality of signals, the number of the plurality of signals is the same as the number of SSBs in the SSB burst set.

In some implementations, if the first signal includes a plurality of signals, the second signal includes an SSB burst set, and if the first signal includes one signal, the second signal is an SSB.

In some implementations, the modulation mode of the first signal is binary on-off keying OOK.

In some implementations, a transmission period of the first signal is determined based on one or more of the following parameters: a length of a transmission period of the first signal; a frame number of a system frame SFN carrying the first signal; a time domain position of the transmission period of the first signal within a frame.

In some implementations, a frame carrying the first signal is determined based on one or more of: a length of a transmission period of the first signal; an index of a system frame carrying the first signal.

FIG. 15 is a schematic diagram of a network device according to an embodiment of the present disclosure. The network device 1500 illustrated in FIG. 15 includes a sending unit 1510.

The sending unit 1510 is configured to transmit a first signal to a terminal device. A transmission resource of the first signal is determined based on first information, and the first information includes information of a transmission resource of a second signal associated with the first signal and/or configuration information of a transmission resource of the first signal. The first signal is used for synchronization and/or measurement by a low-power receiver in the terminal device, and the second signal includes one or more of: a synchronization signal broadcast channel block SSB; an SSB burst set; a primary synchronization signal PSS/secondary synchronization signal SSS in the SSB.

In some implementations, the first information includes information of a transmission resource of the second signal, and the transmission resource of the second signal partially or completely overlaps with the transmission resource of the first signal in the time domain.

In some implementations, the first information includes information of a transmission resource of the second signal, the transmission resource of the first signal is determined based on the transmission resource of the second signal and a first parameter, and the first parameter is used to indicate a time domain interval between the transmission resource of the first signal and the transmission resource of the second signal.

In some implementations, the first parameter is used to indicate a time domain interval between a starting position in the time domain of a transmission resource of the first signal and a starting position in the time domain of a transmission resource of the second signal.

In some implementations, the first parameter is used to indicate a time interval between a frame carrying the first signal and a frame carrying the second signal; and/or a time interval in the time domain between a transmission resource of the first signal and a target location of a frame carrying the first signal.

In some implementations, the second signal associated with the first signal is determined based on predefined information and/or configuration information sent by a network device.

In some implementations, the predefined information and/or the configuration information is used to indicate that a transmission resource of the first signal is determined based on a transmission resource of the second signal in a transmission period of the first signal.

In some implementations, the predefined information and/or the configuration information includes an index of the second signal; and/or a relative position between a transmission resource of the second signal and a transmission resource of the first signal within a transmission period of the first signal.

In some implementations, the first information includes configuration information of a transmission resource of the first signal, and the configuration information is used to configure one or more of: a time domain length of the first signal; a transmission period of the first signal; a subcarrier spacing of the first signal; a time domain position of the first signal in a first frame; the number of first signals transmitted in the bearing first frame.

In some implementations, the transmission period of the first signal is greater than the transmission period of the second signal.

In some implementations, the transmission period of the first signal is an integer multiple of the transmission period of the second signal.

In some implementations, the number of time domain resources included in the transmission resource of the first signal is greater than or equal to the number of time domain resources included in the transmission resource of the second signal.

In some implementations, there is a quasi-co-located QCL relationship between the first signal and the second signal.

In some implementations, there is a QCL relationship between the first signal and the second signal which have the same index.

In some implementations, the second signal is an SSB burst set, and the first signal is a plurality of signals, the number of the plurality of signals is the same as the number of SSBs in the SSB burst set.

In some implementations, if the first signal includes a plurality of signals, the second signal includes an SSB burst set, and if the first signal includes one signal, the second signal is an SSB.

In some implementations, the modulation mode of the first signal is binary on-off keying OOK.

In some implementations, a transmission period of the first signal is determined based on one or more of the following parameters: a length of a transmission period of the first signal; a frame number of a system frame SFN carrying the first signal; a time domain position of the transmission period of the first signal within a frame.

In some implementations, a frame carrying the first signal is determined based on one or more of: a length of a transmission period of the first signal; an index of a system frame carrying the first signal.

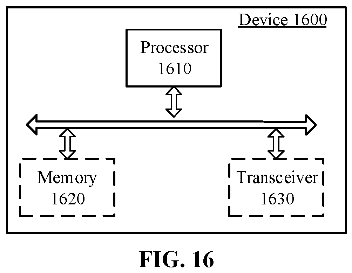

In an alternative embodiment, the receiving unit 1410 may be a transceiver 1630. The terminal device 1400 may further include a processor 1610 and a memory 1620, as shown in FIG. 16.

In an alternative embodiment, the sending unit 1510 may be a transceiver 1630. The network device 1500 may also include a processor 1610 and a memory 1620, as particularly shown in FIG. 16.

FIG. 16 is a schematic structural diagram of a communication device according to an embodiment of the present disclosure. The dashed line in FIG. 16 indicates that the unit or module is optional. The device 1600 may be used to implement the methods described in the method embodiments described above. The device 1600 may be a chip, a terminal device, or a network device.

The device 1600 may include one or more processors 1610. The processor 1610 may support the device 1600 to implement the methods described in the previous method embodiments. The processor 1610 may be a general purpose processor or a special purpose processor. For example, the processor may be a central processing unit (CPU). Alternatively, the processor may be other general-purpose processors, digital signal processors (DSP), application specific integrated circuits (ASICs), field programmable gate arrays (FPGAs) or other programmable logic devices, discrete gate or transistor logic devices, discrete hardware components, and the like. The general-purpose processor may be a microprocessor or the processor may be any conventional processor or the like.

The device 1600 may also include one or more memories 1620. A program is stored on the memory 1620, and can be executed by the processor 1610, to cause the processor 1610 to perform the methods described in the previous method embodiments. The memory 1620 may be independent of the processor 1610 or may be integrated in the processor 1610.

The device 1600 may also include a transceiver 1630. The processor 1610 may communicate with other devices or chips through the transceiver 1630. For example, the processor 1610 may transmit and receive data with other devices or chips through the transceiver 1630.

The embodiments of the present disclosure also provide a computer-readable storage medium for storing a program. The computer-readable storage medium can be applied to a terminal or a network device provided by an embodiment of the present disclosure, and the program causes a computer to execute methods executed by the terminal or the network device in various embodiments of the present disclosure.

The embodiments of the present disclosure also provide a computer program product. The computer program product includes a program. The computer program product can be applied to a terminal or a network device provided by an embodiment of the present disclosure, and the program causes a computer to execute methods executed by the terminal or the network device in various embodiments of the present disclosure.

The embodiments of the present disclosure also provide a computer program. The computer program can be applied to a terminal or a network device provided by an embodiment of the present disclosure, and the computer program causes a computer to execute methods executed by the terminal or the network device in various embodiments of the present disclosure.

It is to be understood that the terms "system" and "network" may be used interchangeably in present disclosure. In addition, the terminology used in the present disclosure is only used to explain specific embodiments of the present disclosure, and is not intended to limit the present disclosure. The terms "first", "second", "third" and "fourth" and the like in the specification and claims of the present disclosure and the accompanying drawings are used to distinguish different objects and are not used to describe a particular order. Furthermore, the terms "comprising" and "having" and any variations thereof are intended to cover a non-exclusive inclusion.

In the embodiment of the present disclosure, the "indication" may be a direct indication, an indirect indication, or an indication that there is an association relationship. For example, A indicates B, which may mean that A directly indicates B, e.g., B may be acquired by A; or may also mean that A indirectly indicates B, for example, A indicates C, and B can be acquired by C; It can also be indicated that there is an association relationship between A and B.

In the embodiment of the present disclosure, "B corresponding to A" means that B is associated with A, and B can be determined from A. However, it should also be understood that determining B from A does not mean determining B from A alone, but B may also be determined from A and/or other information.

In the embodiment of the present disclosure, the term "correspondence" may mean that there is a direct correspondence or an indirect correspondence between the two objects, or may mean that there is a correlation between the two objects, or may be a relationship between indicating and being indicated, configuring and being configured, or the like.

In the embodiment of the present disclosure, "pre-definition" or "pre-configuration" can be realized by pre-storing corresponding codes, tables, or other ways that can be used to indicate relevant information in a device (for example, including a terminal device and a network device), and the specific implementation method thereof is not limited in the present disclosure. For example, the "pre-definition" may refer to definition in a protocol.

In the embodiment of the present disclosure, the "protocol" may refer to a standard protocol in the communication field, and may include, for example, the LTE protocol, the NR protocol, and related protocols applied to future communication systems, and the present disclosure is not limited thereto.

The term "and/or" in the embodiment of the present disclosure is merely an association relationship describing the associated objects, indicating that there may be three kinds of relationships, for example, A and/or B, which may mean that A exists alone, both A and B exist, and B exists alone. In addition, the character "/" herein generally indicates that the associated objects before and after are in an "or" relationship.

In various embodiments of the present disclosure, the sequence numbers of the above-described processes do not mean the order of the execution, and the execution order of the processes should be determined by the function and internal logic thereof, and should not constitute any limitation on the implementation process of the embodiments of the present disclosure.

In the several embodiments provided herein, it should be understood that the disclosed systems, apparatuses, and methods may be implemented in other ways. For example, the apparatus embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be indirect coupling or communication connection through some interface, devices or units, may be in electrical, mechanical or other form.

The units described as separate components may or may not be physically separated, and the components shown as units may or may not be physical units, i.e. may be located in one place, or may be distributed over multiple network units. Some or all of the units may be selected according to actual needs to achieve the purpose of the solution of the present embodiment.

In addition, all the functional units in each embodiment of the present disclosure may be integrated in one processing unit, each unit may physically exist alone, or two or more units may be integrated in one unit.

The above-described embodiments may be implemented in whole or in part by software, hardware, firmware, or any combination thereof. When implemented using software, the above-described embodiments may be implemented in whole or in part in the form of a computer program product. The computer program product includes one or more computer instructions. When the computer program instructions are loaded and executed on a computer, processes or functions according to embodiments of the present disclosure are generated in whole or in part. The computer may be a general-purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center via wired (e.g., a coaxial cable, a fiber optic, a digital subscriber line (DSL)) or wireless (e.g., infrared, wireless, microwave, etc.) manner. The computer-readable storage medium may be any available medium that can be read by a computer or a data storage device such as a server, a data center, or the like that incorporates one or more available media integrations. The available medium may be a magnetic medium (e.g., a floppy disk, a hard disk, a magnetic tape), an optical medium (e.g., a digital video disc (DVD)), or a semiconductor medium (e.g., a solid-state disk (SSD)), or the like.

The foregoing are only specific embodiments of the present disclosure, but the protection scope of the present disclosure is not limited thereto, and changes or substitutions easily conceived by the skilled person within the technical scope disclosed in the present disclosure should fall within the scope of protection of the present disclosure. Therefore, the scope of protection of the present disclosure should be determined by the scope of protection of the claims.

## Claims

1. A wireless communication method, comprising:
receiving, by a terminal device, a first signal sent by a network device, wherein a transmission resource of the first signal is determined based on first information,
the first information comprises: information of a transmission resource of a second signal associated with the first signal, and/or configuration information of the transmission resource of the first signal,
wherein the first signal is used by a low-power receiver in the terminal device for synchronization and/or measurement, and the second signal comprises one or more of: a synchronization signal broadcast channel block (SSB); an SSB burst set; a primary synchronization signal (PSS)/secondary synchronization signal (SSS) in the SSB.

2. The method of claim 1, wherein the first information comprises the information of the transmission resource of the second signal, and the transmission resource of the first signal partially or completely overlap the transmission resource of the second signal in a time domain.

3. The method of claim 1 or 2, wherein the first information comprises the information of the transmission resource of the second signal, and the transmission resource of the first signal is determined based on the transmission resource of the second signal and a first parameter, the first parameter being used for indicating a time domain interval between the transmission resource of the first signal and the transmission resource of the second signal.

4. The method of claim 3, wherein the first parameter is used to indicate a time domain interval between a starting position in the time domain of the transmission resource of the first signal and a starting position in the time domain of the transmission resource of the second signal.

5. The method of claim 3, wherein the first parameter is used to indicate:
a time interval between a frame carrying the first signal and a frame carrying the second signal; and/or
a time interval in the time domain between the transmission resource of the first signal and a target location of a frame carrying the first signal.

6. The method of claim 1 or 2, wherein the second signal associated with the first signal is determined based on predefined information and/or configuration information sent by the network device.

7. The method of claim 6, wherein the predefined information and/or the configuration information is used to indicate that the transmission resource of the first signal is determined based on the transmission resource of the second signal in a transmission period of the first signal.

8. The method of claim 6 or 7, wherein the predefined information and/or the configuration information comprises:
an index of the second signal; and/or
a relative position between the transmission resource of the second signal and the transmission resource of the first signal within a transmission period of the first signal.

9. The method of claim 1, wherein the first information comprises configuration information of the transmission resource of the first signal, and the configuration information is used to configure one or more of:
a time domain length of the first signal;
a transmission period of the first signal;
a subcarrier spacing of the first signal;
a time domain position of the first signal in a first frame; or
number of the first signals carried and transmitted in the first frame.

10. The method of any one of claims 1 to 9, wherein a transmission period of the first signal is greater than a transmission period of the second signal.

11. The method of claim 10, wherein the transmission period of the first signal is an integer multiple of the transmission period of the second signal.

12. The method of any one of claims 1 to 11, wherein number of time domain resources comprised in the transmission resource of the first signal is greater than or equal to number of time domain resources comprised in the transmission resource of the second signal.

13. The method of any one of claims 1 to 12, wherein there is a quasi-co-located (QCL) relationship between the first signal and the second signal.

14. The method of any one of claims 1 to 13, wherein there is a quasi-co-located (QCL) relationship between the first signal and the second signal which have a same index.

15. The method of any one of claims 1 to 14, wherein the second signal is an SSB burst set and the first signal is a plurality of signals, number of the plurality of signals being the same as number of SSBs in the SSB burst set.

16. The method of any one of claims 1 to 15, wherein if the first signal comprises a plurality of signals, the second signal comprises an SSB burst set; and
if the first signal comprises one signal, the second signal is an SSB.

17. The method of any one of claims 1 to 16, wherein a modulation manner of the first signal is a binary on-off keying (OOK).

18. The method of any one of claims 1 to 17, wherein the transmission period of the first signal is determined based on one or more of the following parameters:
a length of a transmission period of the first signal;
a frame number of a system frame (SFN) carrying the first signal; or
a time domain position of a transmission period of the first signal within a frame.

19. The method of any one of claims 1 to 18, wherein a frame carrying the first signal is determined based on one or more of:
a length of a transmission period of the first signal;
an index of a system frame carrying the first signal.

20. A wireless communication method, comprising:
sending, by a network device, a first signal to a terminal device, wherein a transmission resource of the first signal is determined based on first information,
the first information comprises: information of a transmission resource of a second signal associated with the first signal, and/or configuration information of the transmission resource of the first signal,
wherein the first signal is used by a low-power receiver in the terminal device for synchronization and/or measurement, and the second signal comprises one or more of: a synchronization signal broadcast channel block (SSB); an SSB burst set; a primary synchronization signal (PSS)/secondary synchronization signal (SSS) in the SSB.

21. The method of claim 20, wherein the first information comprises the information of the transmission resource of the second signal, and the transmission resource of the first signal partially or completely overlap the transmission resource of the second signal in a time domain.

22. The method of claim 20 or 21, wherein the first information comprises the information of the transmission resource of the second signal, and the transmission resource of the first signal is determined based on the transmission resource of the second signal and a first parameter, the first parameter indicating a time domain interval between the transmission resource of the first signal and the transmission resource of the second signal.

23. The method of claim 22, wherein the first parameter is used to indicate a time domain interval between a starting position in the time domain of the transmission resource of the first signal and a starting position in the time domain of the transmission resource of the second signal.

24. The method of claim 22, wherein the first parameter is used to indicate:
a time interval between a frame carrying the first signal and a frame carrying the second signal; and/or
a time interval in the time domain between the transmission resource of the first signal and a target location of a frame carrying the first signal.

25. The method of claim 20 or 21, wherein the second signal associated with the first signal is determined based on predefined information and/or configuration information sent by the network device.

26. The method of claim 25, wherein the predefined information and/or the configuration information is used to indicate that the transmission resource of the first signal is determined based on the transmission resource of the second signal in a transmission period of the first signal.

27. The method of claim 25 or 26, wherein the predefined information and/or the configuration information comprises:
an index of the second signal; and/or
a relative position between the transmission resource of the second signal and the transmission resource of the first signal within a transmission period of the first signal.

28. The method of claim 20, wherein the first information comprises configuration information of the transmission resource of the first signal, and the configuration information is used to configure one or more of:
a time domain length of the first signal;
a transmission period of the first signal;
a subcarrier spacing of the first signal;
a time domain position of the first signal in a first frame; or
number of the first signals carried and transmitted in the first frame.

29. The method of any one of claims 20 to 28, wherein a transmission period of the first signal is greater than a transmission period of the second signal.

30. The method of claim 29, wherein the transmission period of the first signal is an integer multiple of the transmission period of the second signal.

31. The method of any one of claims 20 to 30, wherein number of time domain resources comprised in the transmission resource of the first signal is greater than or equal to number of time domain resources comprised in the transmission resource of the second signal.

32. The method of any one of claims 20 to 31, wherein there is a quasi-co-located (QCL) relationship between the first signal and the second signal.

33. The method of any one of claims 20 to 32, wherein there is a quasi-co-located (QCL) relationship between the first signal and the second signal which have a same index.

34. The method of any one of claims 20 to 33, wherein the second signal is an SSB burst set and the first signal is a plurality of signals, number of the plurality of signals being the same as number of SSBs in the SSB burst set.

35. The method of any one of claims 20 to 34, wherein if the first signal comprises a plurality of signals, the second signal comprises an SSB burst set; and
if the first signal comprises one signal, the second signal is an SSB.

36. The method of any one of claims 20 to 35, wherein a modulation manner of the first signal is a binary on-off keying (OOK).

37. The method of any one of claims 20 to 36, wherein the transmission period of the first signal is determined based on one or more of the following parameters:
a length of a transmission period of the first signal;
a frame number of a system frame (SFN) carrying the first signal; or
a time domain position of a transmission period of the first signal within a frame.

38. The method of any one of claims 20 to 37, wherein the frame carrying the first signal is determined based on one or more of:
a length of a transmission period of the first signal; or
an index of a system frame carrying the first signal.

39. A terminal device comprising:
a receiving unit configured to receive a first signal sent by a network device, wherein a transmission resource of the first signal is determined based on first information,
the first information comprises: information of a transmission resource of a second signal associated with the first signal, and/or configuration information of the transmission resource of the first signal,
wherein the first signal is used by a low-power receiver in the terminal device for synchronization and/or measurement, and the second signal comprises one or more of: a synchronization signal broadcast channel block (SSB); an SSB burst set; a primary synchronization signal (PSS)/secondary synchronization signal (SSS) in the SSB.

40. The terminal device of claim 39, wherein the first information comprises the information of the transmission resource of the second signal, and the transmission resource of the first signal partially or completely overlap the transmission resource of the second signal in a time domain.

41. The terminal device of claim 39 or 40, wherein the first information comprises the information of the transmission resource of the second signal, and the transmission resource of the first signal is determined based on the transmission resource of the second signal and a first parameter, the first parameter being used for indicating a time domain interval between the transmission resource of the first signal and the transmission resource of the second signal.

42. The terminal device of claim 41, wherein the first parameter is used to indicate a time domain interval between a starting position in the time domain of the transmission resource of the first signal and a starting position in the time domain of the transmission resource of the second signal.

43. The terminal device of claim 41, wherein the first parameter is used to indicate:
a time interval between a frame carrying the first signal and a frame carrying the second signal; and/or
a time interval in the time domain between the transmission resource of the first signal and a target location of a frame carrying the first signal.

44. The terminal device of claim 39 or 40, wherein the second signal associated with the first signal is determined based on predefined information and/or configuration information sent by the network device.

45. The terminal device of claim 44, wherein the predefined information and/or the configuration information is used to indicate that the transmission resource of the first signal is determined based on the transmission resource of the second signal in a transmission period of the first signal.

46. The terminal device of claim 44 or 45, wherein the predefined information and/or the configuration information comprises:
an index of the second signal; and/or
a relative position between the transmission resource of the second signal and the transmission resource of the first signal within a transmission period of the first signal.

47. The terminal device of claim 39, wherein the first information comprises configuration information of the transmission resource of the first signal, and the configuration information is used to configure one or more of:
a time domain length of the first signal;
a transmission period of the first signal;
a subcarrier spacing of the first signal;
a time domain position of the first signal in a first frame; or
number of the first signals carried and transmitted in the first frame.

48. The terminal device of any one of claims 39 to 47, wherein a transmission period of the first signal is greater than a transmission period of the second signal.

49. The terminal device of claim 48, wherein the transmission period of the first signal is an integer multiple of the transmission period of the second signal.

50. The terminal device of any one of claims 39 to 49, wherein number of time domain resources comprised in the transmission resource of the first signal is greater than or equal to number of time domain resources comprised in the transmission resource of the second signal.

51. The terminal device of any one of claims 39 to 50, wherein there is a quasi-co-located (QCL) relationship between the first signal and the second signal.

52. The terminal device of any one of claims 39 to 51, wherein there is a quasi-co-located (QCL) relationship between the first signal and the second signal which have a same index.

53. The terminal device of any one of claims 39 to 52, wherein the second signal is an SSB burst set and the first signal is a plurality of signals, number of the plurality of signals being the same as number of SSBs in the SSB burst set.

54. The terminal device of any one of claims 39 to 53, wherein if the first signal comprises a plurality of signals, the second signal comprises an SSB burst set; and
if the first signal comprises one signal, the second signal is an SSB.

55. The terminal device of any one of claims 39 to 54, wherein a modulation manner of the first signal is a binary on-off keying (OOK).

56. The terminal device of any one of claims 39 to 55, wherein the transmission period of the first signal is determined based on one or more of the following parameters:
a length of a transmission period of the first signal;
a frame number of a system frame (SFN) carrying the first signal; or
a time domain position of a transmission period of the first signal within a frame.

57. The terminal device of any one of claims 39 to 56, wherein a frame carrying the first signal is determined based on one or more of:
a length of a transmission period of the first signal;
an index of a system frame carrying the first signal.

58. A network device comprising:
a sending unit configured to send a first signal to a terminal device, wherein a transmission resource of the first signal is determined based on first information,
the first information comprises: information of a transmission resource of a second signal associated with the first signal, and/or configuration information of the transmission resource of the first signal,
wherein the first signal is used by a low-power receiver in the terminal device for synchronization and/or measurement, and the second signal comprises one or more of: a synchronization signal broadcast channel block (SSB); an SSB burst set; a primary synchronization signal (PSS)/secondary synchronization signal (SSS) in the SSB.

59. The network device of claim 58, wherein the first information comprises the information of the transmission resource of the second signal, and the transmission resource of the first signal partially or completely overlap the transmission resource of the second signal in a time domain.

60. The network device of claim 58 or 59, wherein the first information comprises the information of the transmission resource of the second signal, and the transmission resource of the first signal is determined based on the transmission resource of the second signal and a first parameter, the first parameter being used for indicating a time domain interval between the transmission resource of the first signal and the transmission resource of the second signal.

61. The network device of claim 60, wherein the first parameter is used to indicate a time domain interval between a starting position in the time domain of the transmission resource of the first signal and a starting position in the time domain of the transmission resource of the second signal.

62. The network device of claim 60, wherein the first parameter is used to indicate:
a time interval between a frame carrying the first signal and a frame carrying the second signal; and/or
a time interval in the time domain between the transmission resource of the first signal and a target location of a frame carrying the first signal.

63. The network device of claim 58 or 59, wherein the second signal associated with the first signal is determined based on predefined information and/or configuration information sent by the network device.

64. The network device of claim 63, wherein the predefined information and/or the configuration information is used to indicate that the transmission resource of the first signal is determined based on the transmission resource of the second signal in a transmission period of the first signal.

65. The network device of claim 63 or 64, wherein the predefined information and/or the configuration information comprises:
an index of the second signal; and/or
a relative position between the transmission resource of the second signal and the transmission resource of the first signal within a transmission period of the first signal.

66. The network device of claim 58, wherein the first information comprises configuration information of the transmission resource of the first signal, and the configuration information is used to configure one or more of:
a time domain length of the first signal;
a transmission period of the first signal;
a subcarrier spacing of the first signal;
a time domain position of the first signal in a first frame; or
number of the first signals carried and transmitted in the first frame.

67. The network device of any one of claims 58 to 66, wherein a transmission period of the first signal is greater than a transmission period of the second signal.

68. The network device of claim 67, wherein the transmission period of the first signal is an integer multiple of the transmission period of the second signal.

69. The network device of any one of claims 58 to 68, wherein number of time domain resources comprised in the transmission resource of the first signal is greater than or equal to number of time domain resources comprised in the transmission resource of the second signal.

70. The network device of any one of claims 58 to 69, wherein there is a quasi-co-located (QCL) relationship between the first signal and the second signal.

71. The network device of any one of claims 58 to 70, wherein there is a quasi-co-located (QCL) relationship between the first signal and the second signal which have a same index.

72. The network device of any one of claims 58 to 71, wherein the second signal is an SSB burst set and the first signal is a plurality of signals, number of the plurality of signals being the same as number of SSBs in the SSB burst set.

73. The network device of any one of claims 58 to 72, wherein if the first signal comprises a plurality of signals, the second signal comprises an SSB burst set; and
if the first signal comprises one signal, the second signal is an SSB.

74. The network device of any one of claims 58 to 73, wherein a modulation manner of the first signal is a binary on-off keying (OOK).

75. The network device of any one of claims 58 to 74, wherein the transmission period of the first signal is determined based on one or more of the following parameters:
a length of a transmission period of the first signal;
a frame number of a system frame (SFN) carrying the first signal; or
a time domain position of a transmission period of the first signal within a frame.

76. The network device of any one of claims 58 to 75, wherein the frame carrying the first signal is determined based on one or more of:
a length of a transmission period of the first signal; or
an index of a system frame carrying the first signal.

77. A terminal device comprising a transceiver, a memory for storing a program, and a processor, wherein the processor is configured for invoking the program in the memory and controlling the transceiver to receive or send a signal to cause the terminal device to perform the method of any one of claims 1 to 19.

78. A network device comprising a transceiver, a memory for storing a program, and a processor, wherein the processor is configured for invoking the program in the memory and controlling the transceiver to receive or send a signal to cause the network device to perform the method of any one of claims 20 to 38.

79. A device comprising a processor for invoking a program from a memory to cause the device to perform the method of any one of claims 1 to 38.

80. A chip comprising a processor for invoking a program from a memory to cause a device on which the chip is mounted to perform the method of any one of claims 1 to 38.

81. A computer-readable storage medium having stored thereon a program that causes a computer to perform the method of any one of claims 1 to 38.

82. A computer program product comprising a program that causes a computer to perform the method of any one of claims 1 to 38.

83. A computer program which causes a computer to perform the method of any one of claims 1 to 38.
